# EUROPEAN PATENT APPLICATION

(11) **EP 2 363 972 A1**
(43) Date of publication of application: **07.09.2011**
(21) Application number: 10154842.8
(22) Date of filing: 26.02.2010
(51) Int. Cl.: H04L 5/00, H04H 20/72, H04H 40/27

(54) **Mapping of service components to physical-layer pipes**

(71) Applicant: Panasonic Corporation, Kadoma-shi Osaka 571-8501 (JP)
(72) Inventor: Petrov, Mihail, 63225, Langen (DE); Herrmann, Frank, 63225, Langen (DE); Rey, Jose Luis, 63225, Langen (DE)
(74) Representative: Grünecker, Kinkeldey, Stockmair & Schwanhäusser Anwaltssozietät

(57) **Abstract**

The present invention relates to the transmission (200) of packetized data (330) in digital broadcasting networks, in particular to the mapping of service components to physical layer pipes (230) so as to allow the implementation of advanced features such as graceful degradation. To this end, individual sub-streams of a data stream are mapped (210,220) independently of each other to a plurality of physical layer pipes (230) and signaling information indicating the employed mapping between the sub-streams and the physical layer pipes is transmitted in addition to the payload data. Specific syntax schemes for layer-1 signaling and layer-2 signaling are provided in the context of MPEG TS and UDP/IP networks.

## Description

The present invention relates to the transmission of packetized data in digital broadcasting networks, in particular to the mapping of service components to physical layer pipes.

### BACKGROUND OF THE INVENTION

Modern second-generation digital broadcasting standards such as DVB-T2 introduce the concept of physical-layer pipes (PLPs). Such a solution enables multiple data streams with different robustness levels to be transmitted over the same radio frequency (RF) channel. After independent PLP processing, the data streams are multiplexed and the resulting signal is modulated.

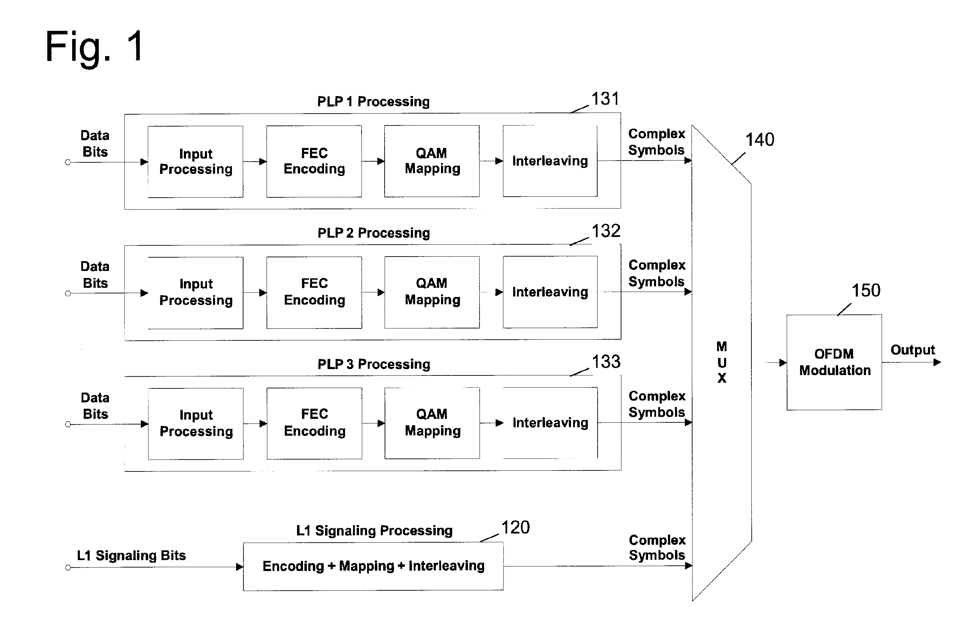

Figure 1 illustrates this process for a DVB-T2 transmitter, where only the blocks relevant to the present invention were shown. The PLP processing contains the following steps: input processing, forward error correction (FEC) encoding, quadrature amplitude modulation (QAM) constellation mapping, and interleaving. The complex symbols at the output of the PLP processing units are multiplexed and OFDM modulated. Also multiplexed are complex symbols that carry physical-layer (layer-1) signaling data. The layer-1 signaling contains all the information needed by the receiver for decoding the data in any PLP.

In broadcasting systems that use PLPs, each service can be transmitted in its own PLP. Since only one service is typically consumed at any given time, this approach reduces the amount of data to be demodulated in the receiver to only the data carried in the PLP of interest. Demodulating only one PLP reduces the signal processing and memory requirements of the receiver and thus the receiver cost.

In broadcasting systems that do not use PLPs, the entire multiplex containing multiple services must be demodulated in the receiver, even though only one service is actually consumed. This approach is obviously suboptimal. In DVB-T for instance, the entire transport stream containing multiple programs must de demodulated in order to decode one program.

In addition to reduced receiver complexity, a further advantage of the PLP approach is that the service components transmitted over an RF channel can have different robustness levels, which enables the implementation of various schemes for the graceful degradation of the reception quality.

In general, a service is a data stream consumed by a user terminal. In digital broadcasting, the terminal is a radio or TV receiver and the services are also referred to as programs, e.g., radio or TV programs. The terms "service" and "program" are used interchangeably in this document. A program can contain several program components, such as the audio and video components of a TV program, which is the most common case. A program may also contain multi-language audio, where each language is transmitted as a separate stream. Another scenario is a so-called simulcast, where the same audio or video content is transmitted over two streams with different robustness levels.

In some cases, a service component can be further subdivided into service sub-components. A typical scenario is scalable video coding, where the video encoder typically produces two sub-components, namely a base layer encoding low-quality video and an enhancement layer encoding only the difference information to high-quality video. Further, when the different parts of a stream are not equally critical in the decoding process, the stream may also be divided into several sub-streams. For instance, in the case of a video stream, the access units containing I frames are more critical to the decoding process than those containing P frames. By carrying the two types of access units in two separate sub-components, differentiated error protection can be applied.

Another important aspect that is desirable to be implemented in a second-generation digital broadcasting standard is graceful degradation. Graceful degradation is a feature that enables the quality of the received service to degrade in steps as reception conditions worsen. In conventional systems, a service is either received well or not received at all. The sharp transition between reception and non-reception is unpleasant for users.

In the case of video services, which consist of audio and video service components, the most basic and straightforward form of graceful degradation can be realized by using different robustness levels for audio and video. When the reception quality is good, both the audio and the video components are received. If the reception quality worsens there will be a threshold below which the video component can no longer be received. The audio component, however, will still be received because of its higher robustness. Eventually, if the reception quality drops below a second threshold, even the audio component will no longer be received.

An improved graceful degradation experience can be achieved by transmitting audio and/or video service components with different quality levels. The service component in question consists of multiple service sub-components, which are transmitted with different robustness levels. Two approaches are known in the art, namely simulcast and scalable coding.

In the case of simulcast, two or more versions of the same service component (audio or video) are transmitted with different robustness levels. The low-quality low-data-rate version is encoded with a higher robustness than the high-quality high-data-rate version. This approach is preferable when there is a significant difference in the data rates of the service component versions.

Scalable coding is usually used for video (SVC: scalable video coding) and typically consists in encoding the video signal as a base layer and an enhancement layer. More than two layers are also possible. The base layer is transmitted with a higher robustness level than the enhancement layer. The base layer encodes a lower-quality video stream, whereas the enhancement layer encodes only the difference information to the full-quality video stream. This approach is preferable when the data rates of the base and enhancement layers are comparable.

In the case of scalable video coding, there are three options for scalability: frame-rate scalability, resolution scalability, and quality scalability. The frame-rate scalability is the easiest to implement in encoders and decoders and requires the least amount of overhead.

The H.264 (AVC) video compression standard is the first widely used standard that includes SVC as an option, therefore H.264 compressed video is a natural choice for implementing video graceful degradation in a digital broadcasting network.

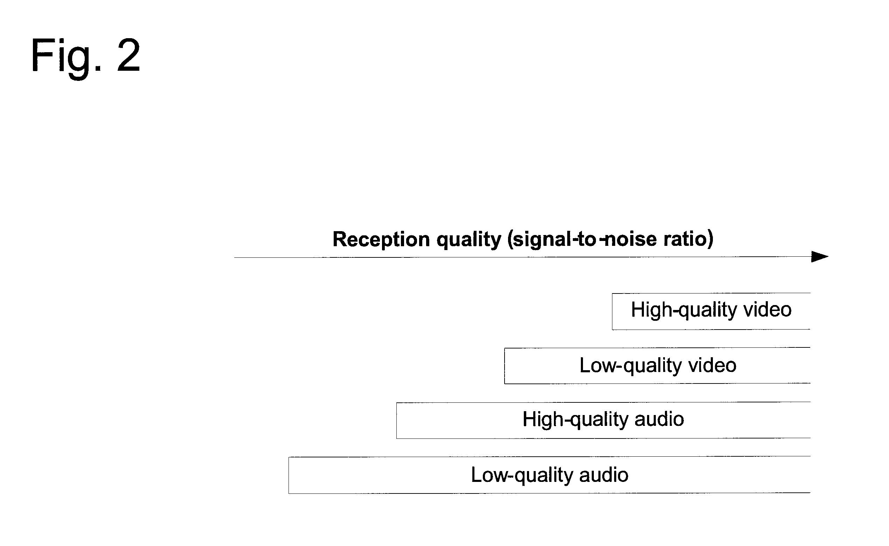

Figure 2 illustrates an exemplary scenario for graceful degradation with four sub-streams per service: two video components and two audio components. In order to enable different robustness levels for the four service components, each component is sent in its own PLP with different coding and modulation.

The transmission of packetized data in digital broadcasting networks is generally based on either the MPEG transport stream protocol or the user datagram protocol (UDP).

The MPEG transport stream (TS) specifications (cf. ISO/IEC 13818-1, "Generic coding of moving pictures and associated audio information: systems" and ITU Recommendation H.222.0, "Generic coding of moving pictures and associated audio information: systems") define a mechanism for multiplexing and synchronizing audio, video, and metadata streams. In this context, the following terms are used interchangeably, namely "service" and "program", as well as "service component", "program component", and "elementary stream".

The MPEG transport stream supports three basic functions, namely (i) multiplexing of multiple streams in a constant-bitrate stream, (ii) synchronization of the streams on decoding, and (iii) decoder buffer management including initialization at decoder start up and continuous management.

A transport stream (TS) has a constant bitrate and consists of fixed-length (188 bytes) packets that carry elementary-stream data. Also carried in TS packets are various tables needed for identifying the programs and the elementary streams in the TS multiplex.

These tables are called program-specific information (PSI) tables and contain all the information needed for the receiver/decoder to demultiplex the elementary streams. Two PSI tables are relevant to the present invention: the program association table (PAT) and the program mapping table (PMT).

Each TS packet only carry data from one elementary stream or PSI table. The data source is indicated through a 13-bit field in the packet header, called PID (packet ID), which uniquely identifies each elementary stream and PSI table. The PID field is used by the decoder to extract the PSI tables and the desired elementary streams from the TS multiplex.

The NULL packets are a special type of packet with a predefined PID = 0x1 FFF. They are stuffing packets that carry no data but are needed for asynchronously multiplexing the elementary streams and PSI tables into the constant-bitrate transport stream.

The PAT has a predetermined PID = 0x0000. It provides the correspondence between each program, identified through a program number, and the PID value of the packets that carry the associated PMT. There is only one PAT per TS multiplex.

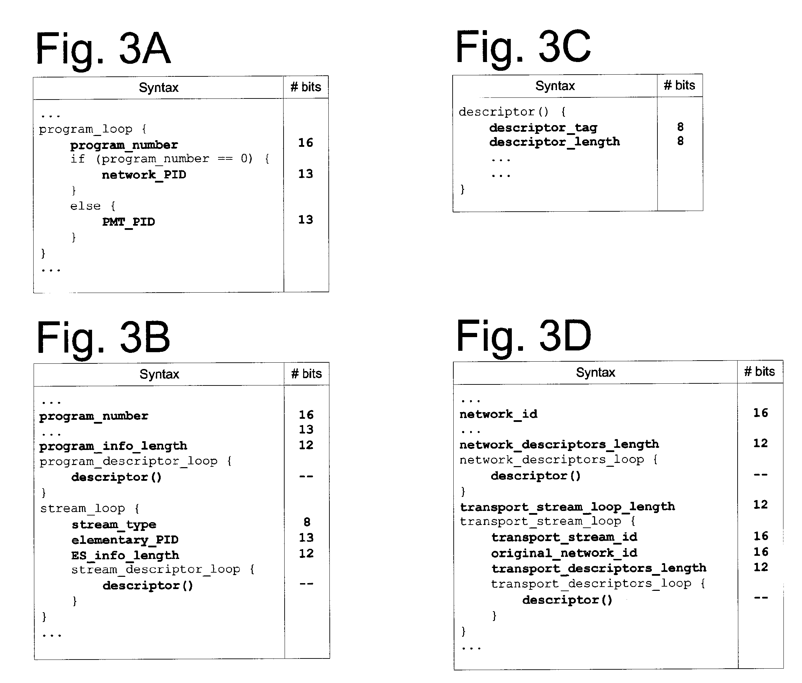

Figure 3A illustrates the PAT fields that are relevant to the present invention. Program number 0 is reserved; the corresponding PID points to a special table called NIT (network information table). The NIT is a private table, i.e. its content is not defined in the MPEG TS specifications.

The PMT indicates the mapping between a program and its elementary streams. There is one PMT for each program in the TS multiplex, the PMT of each program being carried in TS packets with different PIDs. All these PIDs are signaled in the PAT.

Figure 3B illustrates the PMT fields that are relevant to the present invention. In addition to the mapping of the elementary streams, the PMT contains descriptors for the program and the program elements (elementary streams) associated with it. It is one of the aims of the present invention to provide a descriptor that is carried in the PMT.

The descriptors are structures that can be used to extend the definitions of programs and program elements. The general format of a descriptor is shown in Figure 3C. All descriptors begin with an 8-bit tag field, which indicates the descriptor type, and an 8-bit length field.

The MPEG TS specifications cover the tags from 0 to 63. Some tags in this range are not yet associated to a descriptor type, which allows for new descriptor types to be defined as the TS specifications evolve. Tags from 64 to 255 are marked as "user private". They are typically assigned to specialized descriptors in systems that employ transport streams, such as the DVB family of standards. It is one of the aims of the present invention to define such descriptors or parts thereof.

In addition to the PSI tables defined by the TS specifications, further tables are defined by various digital broadcasting standards that use transport streams. In the DVB family of standards they are referred to as system information (SI) tables. Some SI tables are mandatory in DVB (cf. ETSI Standard EN 300 468, "Specification for Service Information in DVB systems").

The most important mandatory Sl table is the network information table (NIT). Its PID is always 0x0010 and is also indicated by the network_PID field in PAT. NIT conveys information regarding the network and the physical organization of the transport streams carried over that network. The most important NIT fields are shown in Figure 3D.

Besides several ID fields, most of the information in NIT is contained in descriptors. There are two classes of descriptors in NIT: network descriptors and transport-stream descriptors. A network can carry more than one transport stream. It is one of the aims of the present invention to provide a descriptor to be carried in the NIT.

The user datagram protocol (UDP, defined in RFC 768) is a connectionless transport protocol used in packet networks, typically Internet protocol (IP, defined in RFC 791) networks. Connectionless means that no session state is kept, as opposed to the TCP protocol, which makes it suitable for unidirectional communication, such as digital broadcasting. Moreover, UDP is deployed mainly where real-time constraints apply, like videoconferencing, VoIP applications, and digital broadcasting. Further, UDP ensures data integrity through a CRC checksum but does not guarantee the delivery. Applications using UDP must apply their own resilience mechanisms to correct or mask packet errors. Finally, UDP enables several flows, i.e. services or service components such as audio and video, to be multiplexed over the same connection by means of a 16-bit port number in the UDP packet header.

Unlike TS packets, UDP packets do not have a fixed length. Their length is specified in the header, together with the port numbers and the CRC checksum. Typically, each UDP packet is encapsulated in an IP packet, which adds its own header.

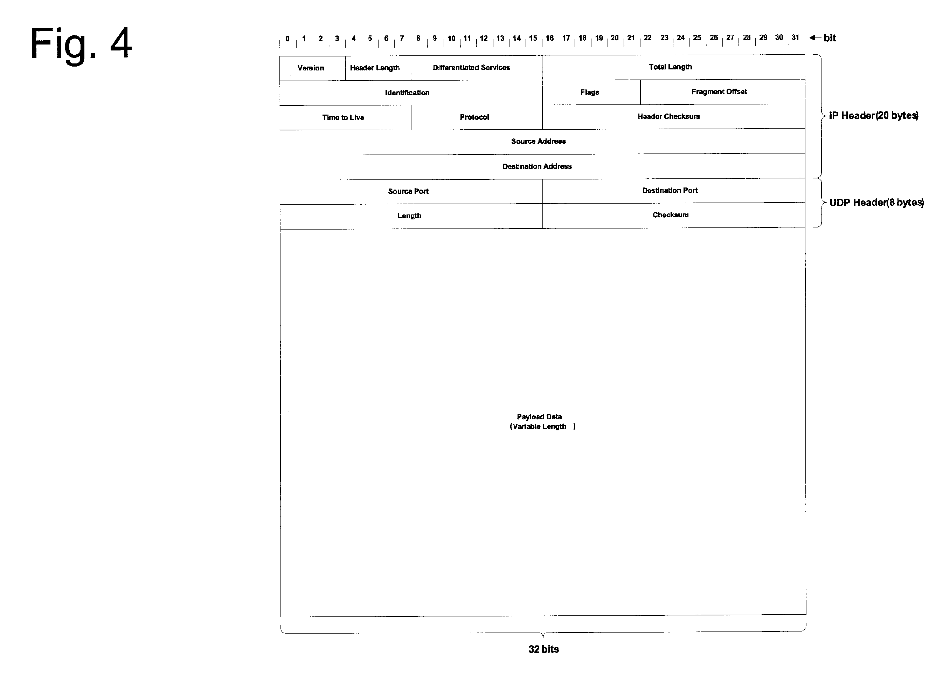

Figure 4 shows an example of such a packet, including the IP and UDP headers. The IP header contains various fields defined in RFC 791. The UDP header contains fields indicating the length of the payload data, a checksum, and source and destination ports. Since the "total length" field in the IP header is 16-bit wide, the IP packet length is limited to 65535 bytes. Excluding the IP and UDP headers (28 bytes), the maximum payload length is 65507 bytes.

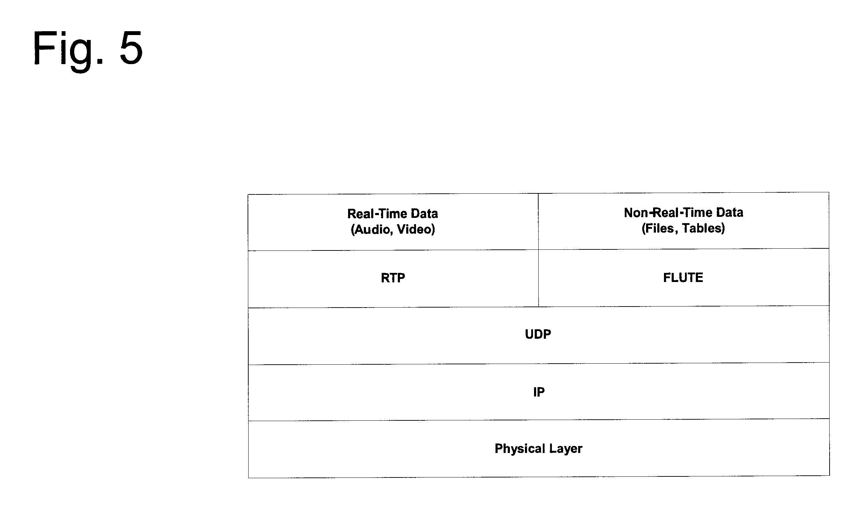

Figure 5 shows a typical protocol stack of an IP-based digital broadcasting network. In addition to the UDP/IP encapsulation mentioned above, a further protocol layer is used. The exact protocol depends on whether or not the transmitted data has real-time constraints. The exact details of these protocols are not relevant to the present invention. They are only mentioned as background information in order to clarify a typical context of the invention.

For real-time data such audio and video, RTP (Real-time Transport Protocol, RFC 1889 and RFC 3550) is typically used. RTP provides means for synchronizing of multiple streams and for jitter compensation by means of a timestamp in the RTP header. Besides the timestamp, the 12-byte RTP header also contains three important fields: the sequence number, the payload type, the synchronization source identifier. Although the payload type and the synchronization source identifier could be used for multiplexing various services and service components, their use for this purpose is discouraged in the art. The right field to be used for this purpose is the port number in the UDP header.

For non-real-time data such as files or carousel data, a typical protocol is FLUTE (File Delivery over Unidirectional Transport, RFC 3296). As its name suggests, it is a protocol for unidirectional delivery of files over Internet in general or broadcast networks in particular. In addition to other specialized functions, the protocol provides increased error resilience through FEC (forward error correction) coding.

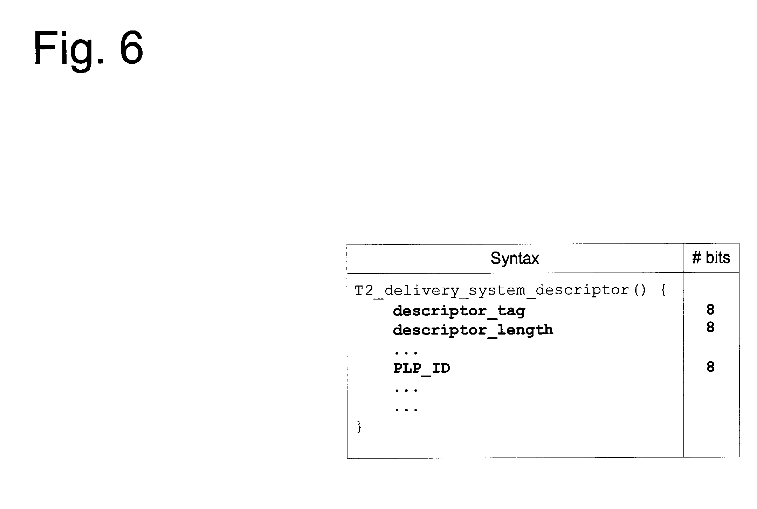

As mentioned before, DVB-T2 has a PLP-based physical layer, which allows the transmission of multiple transport streams in parallel by providing a dedicated PLP for each transport stream. The mapping of transport streams to PLPs is signaled in a T2 delivery system descriptor used in the transport stream loop of the NIT. Since each transport stream is mapped to exactly one PLP, the number of T2 delivery system descriptors equals the number of transport streams in the entire network. The relevant section of the T2 delivery descriptor is shown in Figure 6 and indicates the PLP that carries the current transport stream.

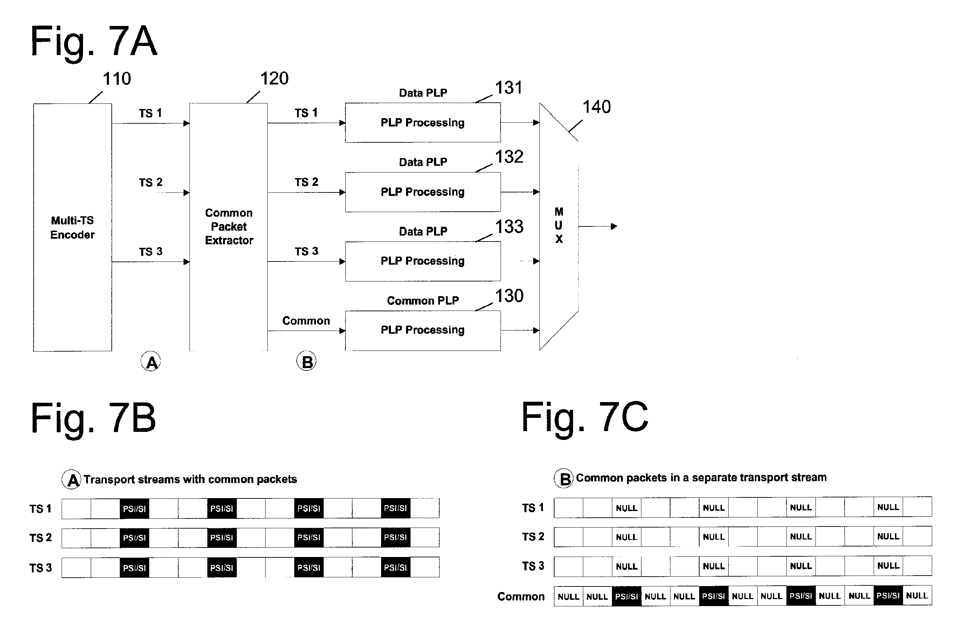

Further, DVB-T2 allows a mapping of the PSI/SI packets common to a group of transport streams to a special type of PLP, called "common PLP". This is illustrated in Figures 7A-7C. Figure 7A shows a block diagram of a DVB-T2 transmitter similar to that of Fig. 1, wherein like reference numerals denote like components.

The mapping of the common PSI/SI packets to the common PLP avoids the redundant transmission of the common PSI/SI packets in all transport streams in the group. A prerequisite for being able to transmit the identical PSI/SI packets in a common PLP is that the packets are present simultaneously in all transport streams and that the transport streams have the same data rate; cf. Figures 7B and 7C. The only way to achieve this is to generate the multiple transport streams in the same transport stream encoder 110, as shown in Figure 7A, so that the common PSI/SI packets can be extracted by the common packet extractor unit 120 in order to be processed by a separate PLP processor 130. Alternatively, a dedicated splitter may be used for splitting the services contained in a bigger transport stream. In the latter case, the splitter must also change the PSI/SI tables in order to produce syntactically correct transport streams.

In any case, the data packets of all sub-streams of a certain transport stream are transmitted through the same PLP. Therefore, they are subject to the same PLP processing, which results in the same level of robustness for each sub-stream. Consequently, the implementation of advanced features such as graceful degradation is not possible in DVB-T2.

### SUMMARY OF THE INVENTION

The aim of the present invention is to overcome the above problem in the prior art and to provide digital broadcasting methods supporting a plurality of physical layer pipes and the implementation of advanced features such as graceful degradation.

This is achieved by the features as set forth in the independent claims.

Preferred embodiments are the subject matter of dependent claims.

It is the particular approach of the present invention to map the individual sub-streams of a data stream independently of each other to a plurality of physical layer pipes and to transmit signaling information indicating the employed mapping between the sub-streams and the physical layer pipes.

According to a first aspect of the present invention, a method for transmitting a data stream comprising a plurality of sub-streams in a digital broadcasting network supporting a plurality of physical layer pipes is provided. The method comprises the steps of obtaining packetized data comprising a plurality of packets, each packet containing data of a corresponding one of the plurality of sub-streams, determining, for each packet, a corresponding physical layer pipe of the plurality of physical layer pipes on the basis of the corresponding sub-stream and a predetermined mapping between the sub-streams and the physical layer pipes; transmitting each packet over the corresponding physical layer pipe; and transmitting signaling information indicating the predetermined mapping between sub-streams and physical layer pipes.

According to a further aspect of the present invention, a method for receiving packetized data in a digital broadcasting network supporting a plurality of physical layer pipes, the packetized data representing a data stream comprising a plurality of sub-streams, each packet of the packetized data containing data of a corresponding one of the plurality of sub-streams, is provided. The method comprises the steps of receiving signaling information indicating a predetermined mapping between the sub-streams and the physical layer pipes; determining, for a desired sub-stream and on the basis of the predetermined mapping, a corresponding physical layer pipe of the plurality of physical layer pipes; and demodulating the corresponding physical layer pipe to receive packets containing data of the desired sub-stream.

According to a further aspect of the present invention, a transmitter for transmitting a data stream comprising a plurality of sub-streams in a digital broadcasting network supporting a plurality of physical layer pipes, is provided. The transmitter comprises a memory unit for storing information indicating a predetermined mapping between the sub-streams and the physical layer pipes; a mapping unit adapted for obtaining packetized data comprising a plurality of packets, each packet containing data of a corresponding one of the plurality of sub-streams, and for determining, for each packet, a corresponding physical layer pipe of the plurality of physical layer pipes on the basis of the corresponding sub-stream and the predetermined mapping indicated by the stored information; and a modulation unit adapted for transmitting each packet over the corresponding physical layer pipe and for transmitting signaling information indicating the predetermined mapping between sub-streams and physical layer pipes.

According to a further aspect of the present invention, a receiver for receiving packetized data in a digital broadcasting network supporting a plurality of physical layer pipes, the packetized data representing a data stream comprising a plurality of sub-streams, each packet of the packetized data containing data of a corresponding one of the plurality of sub-streams, is provided. The receiver comprises a demodulation unit adapted for receiving signaling information indicating a predetermined mapping between the sub-streams and the physical layer pipes; and a control unit adapted for determining, for a desired sub-stream and on the basis of the predetermined mapping, a corresponding physical layer pipe of the plurality of physical layer pipes, wherein demodulation unit is further adapted for demodulating the corresponding physical layer pipe to receive packets containing data of the desired sub-stream.

Preferably, each packet has a packet identifier indicating a corresponding one of the plurality of sub-streams, and the signaling information comprises a table associating each packet identifier with a physical layer pipe identifier indicating one of the plurality of physical layer pipes.

In case that the packets are defined in accordance with the user datagram protocol, the UDP port number of the user datagram protocol is preferably used as the packet identifier.

In case that the data stream is a MPEG transport stream, the packet ID of the MPEG transport protocol is preferably used as the packet identifier. In this case, the signaling information is preferably part of an elementary stream descriptor of the program mapping table (PMT) defined in the MPEG transport protocol. Alternatively, the signaling information may be part of a program descriptor of the program mapping table (PMT) defined in the MPEG transport protocol or part of a transport stream descriptor of the network information table (NIT) defined in the MPEG transport protocol.

According to a preferred embodiment of the present invention, the signaling information is transmitted as part of physical layer signaling data of the digital broadcasting network.

This is particularly advantageous, because it provides transparency for the upper layer, i.e., the remote location where the upper layer packets are generated does not need to know anything about the packet-to-PLP mapping or other physical-layer features. Moreover, physical layer signaling is generic and independent of the upper-layer protocol. Hence, physical layer signaling allows the use of different protocols in the same transmitter, such as MPEG TS for a certain set of sub-streams/physical layer pipes and UDP/IP for another set of sub-streams/physical layer pipes.

The signaling information preferably further comprises a plurality of group identifiers, each group identifier indicating a distinct group of physical layer pipes of the plurality of physical layer pipes; a plurality of tables, each table being associated with a distinct one of the plurality of group identifiers, for associating each packet identifier with a physical layer pipe identifier indicating one of the plurality of physical layer pipes of the group of physical layer pipes indicated by the group identifier; and a plurality of type identifiers, each type identifier being associated with a distinct one of the plurality of group identifiers, for indicating a protocol type of the packets transmitted through the physical layer pipes of the group of physical layer pipes indicated by the group identifier. In this manner, the relevant protocol can easily be determined for each group of physical layer pipes. Moreover, the packet identifiers do not need to be globally unique. It rather suffices if the packet identifiers uniquely identify the corresponding sub-stream within their corresponding group of physical layer pipes.

The above and other objects and features of the present invention will become more apparent from the following description and preferred embodiments given in conjunction with the accompanying drawings, in which:
- Fig. 1: is a block diagram of a conventional DVB-T2 transmitter with three PLPs;
- Fig. 2: is an illustration of a possible graceful-degradation scenario;
- Fig. 3A: is a syntax diagram of the conventional program allocation table;
- Fig. 3B: is a syntax diagram of the conventional program mapping table;
- Fig. 3C: is a syntax diagram of the conventional transport stream descriptor format;
- Fig. 3D: is a syntax diagram of a conventional network information table;
- Fig.4: is an illustration of the conventional UDP/IP packet structure with header fields;
- Fig.5: shows a typical protocol stack for IP data transmission in digital broadcasting networks;
- Fig. 6: is a syntax diagram of the conventional T2 delivery system descriptor;
- Fig. 7A: is a block diagram of a conventional DVB-T2 transmitter with three data PLPs and one common PLP;
- Fig. 7B: is an illustration of the transport streams with common packets as they are output by the multi-TS encoder in Fig. 7A;
- Fig. 7C: is an illustration of the transport streams with the common packets moved to the common PLP, as they are output by the common packet extractor in Fig. 7A;
- Fig. 8: is a block diagram illustrating the multiplexing of streams in a studio and the PLP mapping in a transmitter in accordance with the present invention;
- Fig.9: is a block diagram illustrating the multiplexing of streams in two studios and the PLP mapping in a transmitter in accordance with the present invention;
- Fig. 10: is a block diagram of a receiver in accordance with the embodiments of the present invention;
- Fig. 11 A: is a syntax diagram for layer-1 signaling with two nested loops in accordance with the first embodiment of the present invention;
- Fig. 11B: is a syntax diagram for layer-1 signaling structure with two independent loops in accordance with the second embodiment of the present invention;
- Fig. 11C: is a syntax diagram of an elementary stream descriptor to be used in PMTs in accordance with the third embodiment of the present invention;
- Fig. 11D: is a syntax diagram of a program descriptor to be used in PMTs in accordance with the fourth embodiment of the present invention;
- Fig. 11E: is a syntax diagram of a transport stream descriptor to be used in NIT in accordance with the fifth embodiment of the present invention;
- Fig. 12A: illustrates the process of retrieving the PID-to-PLP mapping for layer-2 signaling in accordance with third and the fourth embodiment of the present invention;
- Fig. 12B: illustrates the process of retrieving the PID-to-PLP mapping for layer-2 signaling in accordance with the fifth embodiment of the present invention; and
- Fig. 13: is a flowchart showing the steps undertaken by a receiver to receive a program, in accordance with the first and the second embodiment of the present invention.

### DETAILED DESCRIPTION

It is the particular approach of the present invention to enable the mapping of a plurality of service components carried in a main multiplex stream to a plurality of physical-layer pipes (PLP). Each service component is mapped to exactly one PLP, but a PLP may carry more than one service component. Thus, the mapping is preferably described by means of a component-to-PLP table, rather than the other way around.

The present invention specifically addresses the case of packetized streams, i.e. the case where the main multiplex stream consists of a succession/plurality of packets. Each packet may contain data from one service component or layer-2 signaling. A packet never contains data from more than one service component. The packets can be of fixed size, as in the case of transport stream, or of variable size, as in the case of UDP/IP or other protocols. In all cases, however, the kind of data carried in a packet is uniquely identified through a field in the packet header. According to preferred embodiments of the present invention, this field is the 13-bit PID field of TS packets, or the 16-bit source and/or destination port number of UDP packets.

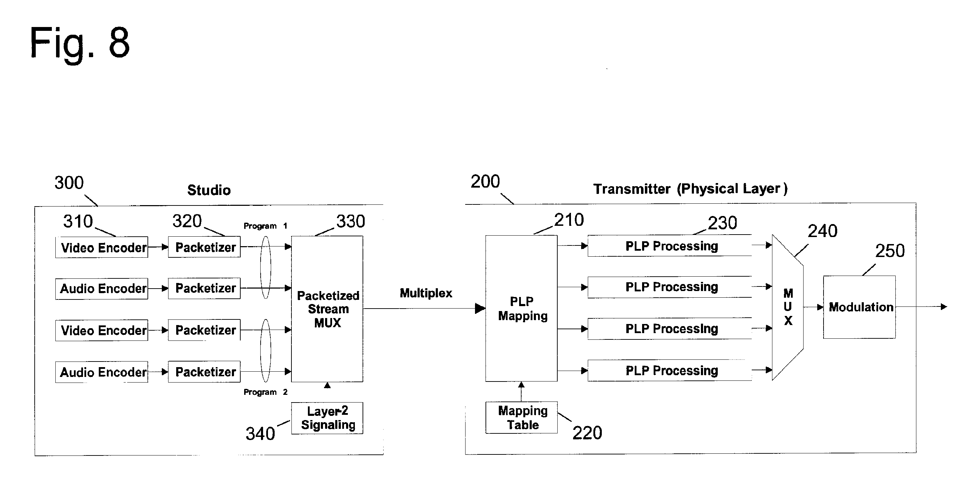

An example of such scenario is shown in Figure 8, where four service components in a multiplex stream are mapped to one PLP each. The service components are typically generated and multiplexed in a broadcast studio 300. Also carried in the multiplex is the layer-2 (system layer) signaling data, which contains protocol-specific information regarding the structure of the multiplex and other information not relevant to the present invention.

The broadcast studio 300 generally comprises a plurality of video and audio encoders 310, which feed their output stream to packetizer units 320. The packetized audio/video data is then fed, together with the layer-2 signaling data 340, to a multiplexer 330 in order to generate a single multiplex, which may then be fed to the transmitter 200.

The component-to-PLP mapping is performed by the PLP-mapping unit 210 in the transmitter 200 in accordance with a predefined mapping table 220. The mapping table 220 is transmitted to the receiver as part of the layer-1 (physical layer) signaling or as part of the layer-2 (system layer) signaling. The receiver needs this table in order to know in which PLP to locate a desired service component. The layer-2 signaling data is carried in one or more PLPs, which are not shown in the figure. It is possible, although not recommended, to carry the layer-2 signaling data in PLPs used by the service components.

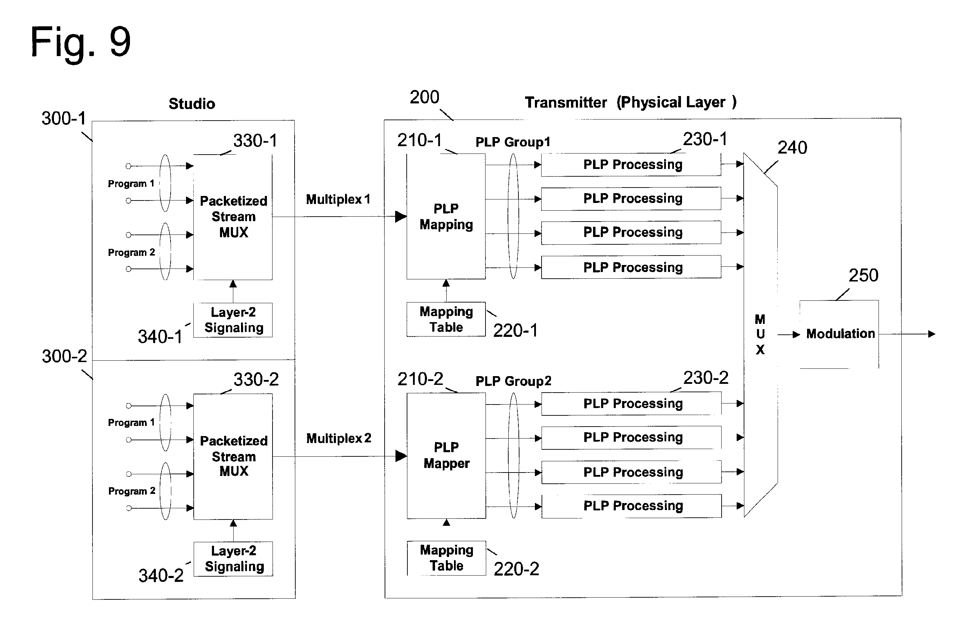

It is also possible to transmit more than one multiplex stream over the same RF channel. The multiplexes can even have different data rates and be generated in different studios. Figure 9 shows such an example, where two multiplexes, each containing four service components, are transmitted by the same receiver (physical layer). Preferably, each multiplex is mapped to a group of PLPs. In this case, each PLP carries data from the same multiplex. The multiplexes do not need to be of the same type. For example, TS and UDP/IP multiplexes can be used in the same transmitter.

The configuration of Fig. 9 is similar to that of Fig. 8, except that the transmitter 200 receives input (multiplex 1, 2) from two studios 300-1 and 300-2, so that there are two sets of PLP-mapper units (210-1, 210-2), PLP-processing units (220-1, 220-2), and mapping tables (220-1, 220-2). Like reference numerals denote like components, a repetition of the detailed description of which is omitted.

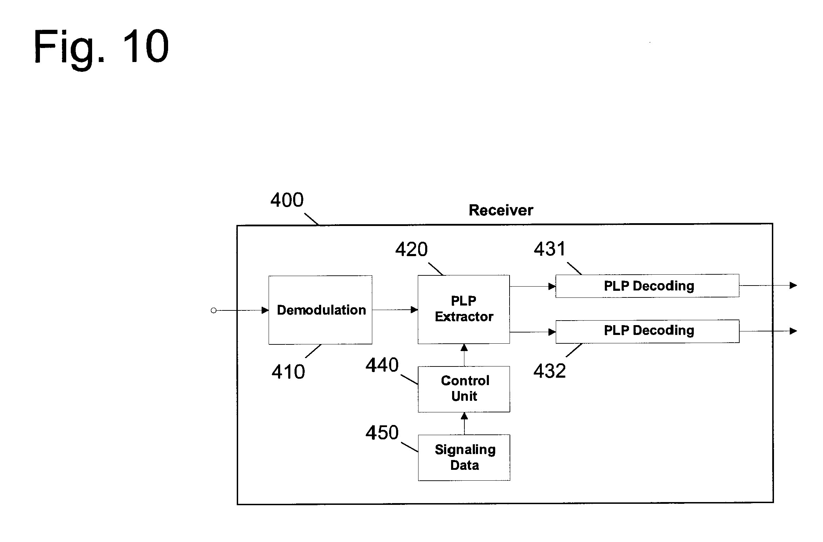

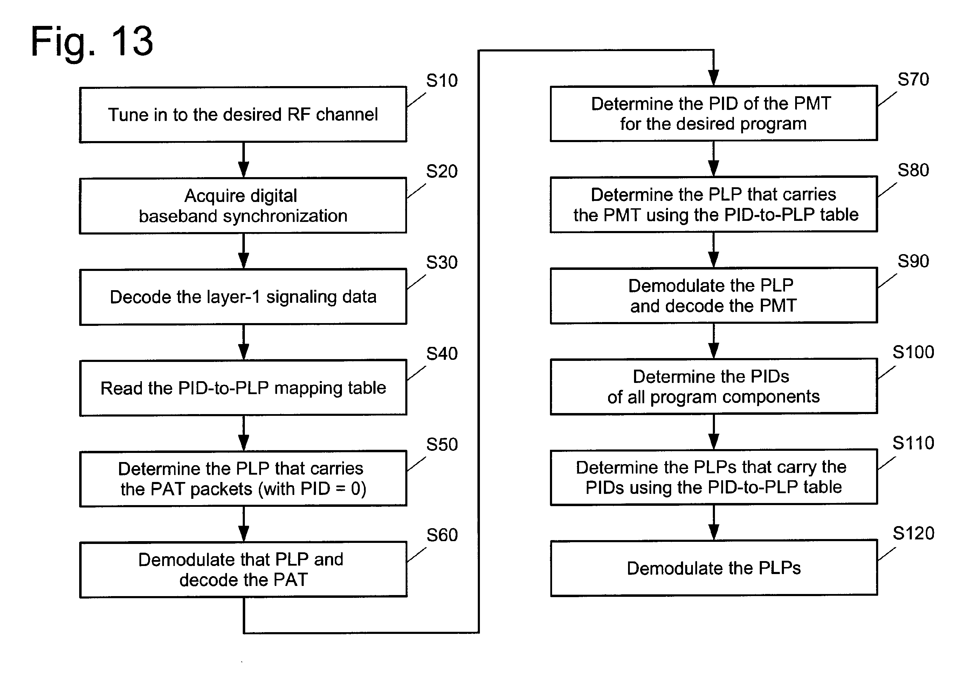

Figure 10 shows a block diagram of a receiver in accordance with the embodiments of the present invention. A RF signal is fed into the demodulation unit 410 of the receiver 400. The demodulated signal is then fed into a PLP extractor unit 420 so as to extract those physical layer pipes that carry the sub-streams required for receiving a desired program. Each of the extracted physical layer pipes may then separately be decoded in a respective one of two or more PLP decoder units 431 and 432. The PLP extractor unit 420 is controlled by control unit 440 in accordance with signaling information 450 that indicates the packet-to-PLP mapping required for selecting the appropriate PLPs. The processes for obtaining the signaling information and selecting the appropriate PLPs are explained in more detail in connection with Figure 13 here below.

In the following, the component-to-PLP mapping is alternatively referred to as packet-to-PID mapping. Using the term "packet" instead of "component" is more general as it also includes the layer-2 signaling packets. Each service component and layer-2 signaling data type has a unique packet identifier (PacketID). As mentioned above, the PacketID is either the PID field for TS packets or the port field for UDP/IP packets.

The packet-to-PLP mapping tables may be sent as part of the layer-1 (physical) or layer-2 (system) signaling. The layer-1 signaling is generated in the transmitter, whereas the layer-2 signaling is generated in the multiplex encoder, e.g. the studio in Figure 8 and Figure 9.

Sending the tables as part of the layer-1 signaling has the advantage of full transparency for the upper layers as the multiplex encoder does not need to know anything about the packet-to-PLP mapping or other physical-layer features. Moreover, the signaling structures can be identical for all multiplex types. It is generic and independent of the upper-layer protocol, so it can be used for different protocols in the same transmitter. Further, there is no need to define a special entry PLP for each PLP group. Finally, layer-1 signaling and layer-2 signaling may be combined, for instance in a redundant or partly redundant manner.

If the tables are sent as part of the layer-2 signaling, the packet-to-PLP mapping used in the transmitter must be inserted into the multiplex stream by the multiplexer encoder. Maintaining the same tables in two different geographic locations may not always be easy.

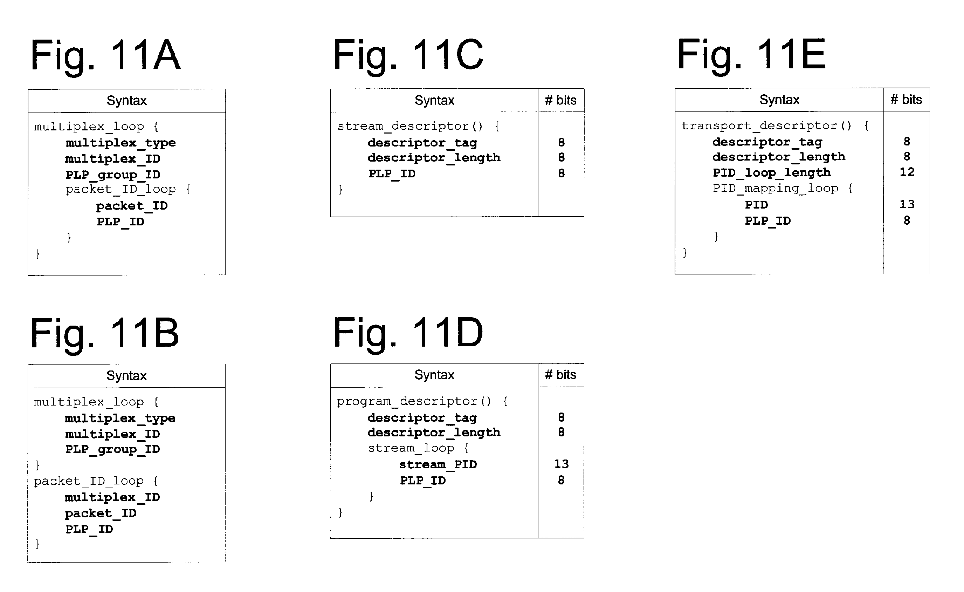

Figure 11A shows a syntax diagram for layer-1 signaling in accordance with a first embodiment of the present invention. The syntax diagram comprises two nested loops. The outer loop signals the multiplex-to-PLP-group mapping, whereas the inner loop signals the packet-to-PLP mapping for all packet types in the current multiplex. The meaning of the four fields is as follows.

The field "multiplex_type" indicates the type of the current multiplex, i.e. TS, UDP/IP, etc. The field "multiplex_ID" uniquely identifies the current multiplex. The field "PLP_group_ID" indicates the PLP group to which the current multiplex is mapped. The field "packet_ID" uniquely identifies the packet type/source within the current multiplex, and the field "PLP_ID" identifies the PLP to which the current packet ID is mapped.

Figure 11B shows a syntax diagram for layer-1 signaling in accordance with a second embodiment of the present invention. The syntax diagram of Fig. 11B is similar to that of Fig. 11A, except that it comprises two independent loops instead of two nested loops. The meaning of the fields is the same as with Fig. 11A. The first loop signals the multiplex-to-PLP-group mapping, while the second loop signals the packet-to-PLP mapping for all packet types in all multiplexes. Since the same PacketID can exist in more than one multiplex, the multiplex ID is also included in the second loop.

It is to be noted that the present invention is not limited to a specific location of the signaling information in layer-1, nor to a specific solution for transmitting the layer-1 signaling data. The present invention is also not limited to layer-1 signaling. Instead, layer-2 signaling may be employed in order to achieve the same advantages. In the case of layer-2 signaling, however, the signaling structure depends on the multiplex type. In the case of TS multiplexes, for instance, various signaling structures may be employed, which may be based on new descriptors that contain the mapping information.

Figure 11C shows a syntax diagram for layer-2 signaling in accordance with a third embodiment of the present invention, which consists in a definition of an elementary-stream descriptor to be used in the stream descriptor loop of the elementary stream loop of the PMTs (cf. Figure 3B). The descriptor indicates the PLP to which the current elementary stream is mapped.

Figure 11D shows a syntax diagram for layer-2 signaling in accordance with a fourth embodiment of the present invention, which consists in a definition of a program descriptor to be used in the program descriptor loop of the PMTs (cf. Figure 3B). The descriptor contains the PID-to-PLP mapping for all elementary streams in a program. It is to be noted that each program has its own PMT.

Figure 11E shows a syntax diagram for layer-2 signaling in accordance with a fifth embodiment of the present invention, which consists in a definition of a TS descriptor to be used in the transport stream loop of the NIT (cf. Figure 3D). The descriptor signals the PID-to-PLP mapping for all PIDs in the current transport stream. Alternatively, the PLP mapping loop may be part of a so-called "delivery descriptor", also used in the transport stream loop of the NIT. For example, the PLP_ID field in the T2 delivery system descriptor (cf. Figure 6) may be replaced with the PID-to-PLP mapping loop.

For each of the third to fifth embodiment, which relate to layer-2 signaling, at least the PAT should be mapped to a predefined PLP because initially the mapping is not known to the receiver. One such PLP is needed per transport-stream multiplex (and PLP group). Such PLPs are referred to as entry PLPs or common PLPs. The third and the fourth embodiment require all PMTs to be located in the entry PLP, whereas the fifth embodiment requires the NIT to be located in the entry PLP.

The steps performed by the receiver when switching to a new transport stream depend on the location of the PID-to-PLP mapping. The first step is identical for all embodiments and consists in decoding the entry PLP of the desired transport stream and parsing the PAT.

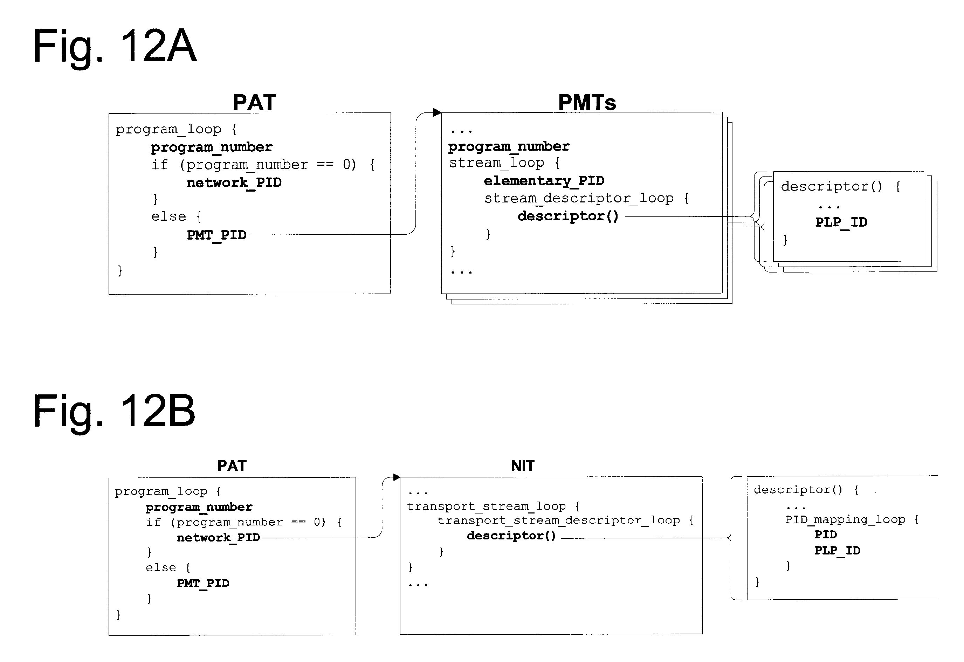

In the case of the third and the fourth embodiment, the PID-to-PLP mapping is extracted from the PMTs, which are carried in the entry PLP. The process is shown in Figure 12A. In the case of the fifth embodiment, the PID-to-PLP mapping is extracted from the NIT, which is carried in the entry PLP. The process is shown in Figure 12B.

The process of receiving a program, when layer-1 signaling of the PID-to-PLP table is used and no prior information is available from e.g. previous searches, is also illustrated in Figure 13.

In step S10, the receiver tunes in to the desired RF channel and acquires digital baseband synchronization in step S20. The layer-1 signaling data is the decoded in order to read the PID-to-PLP mapping table in steps S30 and S40. After having decoded the mapping table, the PLP that carries the PAT packets (with PID = 0) is determined in step S50. The determined PLP is demodulated and the PAT is decoded in step S60. Based on the PAT, the receiver determines the PID of the PMT for the desired program (Step S70). In step S80, the receiver refers once more to the PID-to-PLP mapping table and determines the PLP that carries the PMT for the desired program. The PLP may then be demodulated and the PMT decoded (step S90). Based on the PMT, the receiver determines the PiDs of all program components (step S100) and determine the PLPs that carry the determined PiDs using the PID-to-PLP table (step S110). Finally, the receiver demodulate the PLPs in step S120 in order to receive the desired program.

Summarizing, the present invention relates to the transmission of packetized data in digital broadcasting networks, in particular to the mapping of service components to physical layer pipes so as to allow the implementation of advanced features such as graceful degradation. To this end, individual sub-streams of a data stream are mapped independently of each other to a plurality of physical layer pipes and signaling information indicating the employed mapping between the sub-streams and the physical layer pipes is transmitted in addition to the payload data. Specific syntax schemes for layer-1 signaling and layer-2 signaling are provided in the context of MPEG TS and UDP/IP networks.

## Claims

1. A method for transmitting a data stream comprising a plurality of sub-streams in a digital broadcasting network supporting a plurality of physical layer pipes, said method comprising the steps of
obtaining packetized data comprising a plurality of packets, each packet containing data of a corresponding one of the plurality of sub-streams,
determining, for each packet, a corresponding physical layer pipe of the plurality of physical layer pipes on the basis of the corresponding sub-stream and a predetermined mapping between the sub-streams and the physical layer pipes;
transmitting each packet over the corresponding physical layer pipe; and
transmitting signaling information indicating the predetermined mapping between sub-streams and physical layer pipes.

2. A method for receiving packetized data in a digital broadcasting network supporting a plurality of physical layer pipes, the packetized data representing a data stream comprising a plurality of sub-streams, each packet of the packetized data containing data of a corresponding one of the plurality of sub-streams, said method comprising the steps of
receiving (S10-S40) signaling information indicating a predetermined mapping between the sub-streams and the physical layer pipes;
determining (S50-S110), for a desired sub-stream and on the basis of the predetermined mapping, a corresponding physical layer pipe of the plurality of physical layer pipes; and
demodulating (S120) the corresponding physical layer pipe to receive packets containing data of the desired sub-stream.

3. A method according to claim 1 or 2,
wherein each packet has a packet identifier indicating a corresponding one of the plurality of sub-streams, and
wherein the signaling information comprises a table associating each packet identifier with a physical layer pipe identifier indicating one of the plurality of physical layer pipes.

4. A method according to claim 3, wherein packets are defined in accordance with the user datagram protocol and the packet identifier is the UDP port number of the user datagram protocol.

5. A method according to claim 3, wherein the data stream is a MPEG transport stream and the packet identifier is the packet ID of the MPEG transport protocol.

6. A method according to claim 5, wherein the signaling information is part of an elementary stream descriptor of the program mapping table (PMT) defined in the MPEG transport protocol.

7. A method according to claim 5, wherein the signaling information is part of a program descriptor of the program mapping table (PMT) defined in the MPEG transport protocol.

8. A method according to claim 5, wherein the signaling information is part of a transport stream descriptor of the network information table (NIT) defined in the MPEG transport protocol.

9. A method according to any of claims 3 to 5, wherein the signaling information is transmitted as part of physical layer signaling data of the digital broadcasting network.

10. A method according to claim 9, wherein the signaling information further comprises
a plurality of group identifiers, each group identifier indicating a distinct group of physical layer pipes of the plurality of physical layer pipes;
a plurality of tables, each table being associated with a distinct one of the plurality of group identifiers, for associating each packet identifier with a physical layer pipe identifier indicating one of the plurality of physical layer pipes of the group of physical layer pipes indicated by the group identifier; and
a plurality of type identifiers, each type identifier being associated with a distinct one of the plurality of group identifiers, for indicating a protocol type of the packets transmitted through the physical layer pipes of the group of physical layer pipes indicated by the group identifier.

11. A transmitter (200) for transmitting a data stream comprising a plurality of sub-streams in a digital broadcasting network supporting a plurality of physical layer pipes, said transmitter comprising:
a memory unit (220) for storing information indicating a predetermined mapping between the sub-streams and the physical layer pipes;
a mapping unit (210) adapted for obtaining packetized data comprising a plurality of packets, each packet containing data of a corresponding one of the plurality of sub-streams, and for determining, for each packet, a corresponding physical layer pipe of the plurality of physical layer pipes on the basis of the corresponding sub-stream and the predetermined mapping indicated by the stored information; and
a modulation unit (250) adapted for transmitting each packet over the corresponding physical layer pipe and for transmitting signaling information indicating the predetermined mapping between sub-streams and physical layer pipes.

12. A receiver (400) for receiving packetized data in a digital broadcasting network supporting a plurality of physical layer pipes, the packetized data representing a data stream comprising a plurality of sub-streams, each packet of the packetized data containing data of a corresponding one of the plurality of sub-streams, said receiver comprising:
a demodulation unit (410) adapted for receiving signaling information indicating a predetermined mapping between the sub-streams and the physical layer pipes; and
a control unit (440) adapted for determining, for a desired sub-stream and on the basis of the predetermined mapping, a corresponding physical layer pipe of the plurality of physical layer pipes,
wherein demodulation unit (410) is further adapted for demodulating the corresponding physical layer pipe to receive packets containing data of the desired sub-stream.
